# EUROPÄISCHE PATENTSCHRIFT

(11) **EP 1 518 630 B1**
(45) Veröffentlichungstag und Bekanntmachung des Hinweises auf die Patenterteilung: **05.10.2011**
(21) Anmeldenummer: 04019896.2
(22) Anmeldetag: 23.08.2004
(51) Int. Cl.: B23F 9/12, B23F 9/02

(54) **Wälz-Verfahren und -Maschine für Spiralkegelräder**
Method and machine for generating spiral bevel gears
Procédé et machine pour tailler par génération des roues coniques dentées en spirale

(30) Priorität: 23.09.2003 DE 10343854
(43) Veröffentlichungstag der Anmeldung: 30.03.2005
(73) Patentinhaber: Klingelnberg GmbH, 42499 Hückeswagen (DE)
(72) Erfinder: Blasberg, Herbert, 42897 Remscheid (DE); König, Torsten, 93394 Hohndorf (DE); Ribbeck, Karl-Martin, 42897 Remscheid (DE); Radermacher, Matthias, 42499 Hückeswagen (DE)
(74) Vertreter: OK pat AG

(56) Entgegenhaltungen:
- DE-A- 2 006 752
- DE-A- 19 646 189
- GB-A- 1 106 149
- US-A- 5 310 295

## Beschreibung

Die Erfindung betrifft ein Verfahren und eine Maschine zur Spanenden Bearbeitung von Spiralkegelrädern. Die vorliegende Patentanmeldung beansprucht die Priorität der deutschen Patentanmeldung DE 103 43 854.8, die am 23. September 2003 eingereicht wurde.

Bei diesem Verfahren handelt es sich generell um das sogenannte Einzelteilverfahren, wie es beispielsweise in dem 1962 in den USA erschienenen Buch von Darle W. Dudley "Gear Handbook" im Kapitel 20-2 beschrieben ist. Im Gegensatz zum kontinuierlichen Teilverfahren wird hier mit einem Werkzeug immer erst eine Zahnlücke vollständig hergestellt, das Werkstück um eine Zahnteilung weiter geteilt, dann in gleicher Weise die nächste Zahnlücke bearbeitet usw., bis aus dem Werkstück ein komplettes Kegelrad geworden ist. Als Werkzeug kann z.B. ein Messerkopf oder eine topfförmige Schleifscheibe zum Einsatz kommen. Bei Spiralkegelrädern, die nach diesem Verfahren hergestellt werden, haben die Zahnflanken eine kreisbogenförmige Längskrümmung.

In diesem Fall soll die Bezeichnung "Spiralkegelräder" sowohl nicht achsversetzte als auch achsversetzte Kegelräder umfassen. Will man beide Arten unterscheiden, werden die achsversetzten Kegelräder kurz Hypoidräder genannt.

Aus dem Gear Handbook geht weiter hervor, daß es für Spiralkegelräder zwei Erzeugungsprozesse gibt. In einem Fall werden die Zahnlücken vom Ritzel und Tellerrad eines Kegelradpaares jeweils in Wälzprozessen erzeugt, in dem anderen Fall werden die Zahnlücken des Tellerrades nur durch Eintauchen des rotierenden Messerkopfs in das stillstehende Werkstück hergestellt, wogegen die Ritzellücken in einem speziellen Wälzprozeß mit einem geneigten Messerkopf erzeugt werden. In beiden Fällen liegt dem Wälzprozeß ein imaginäres Erzeugerrad zugrunde, das bei der Bearbeitung in der Verzahnmaschine mit dem Werkstück eine Wälzbewegung ausführt. Im ersten Fall ist das Erzeugerrad eine ebene verzahnte Scheibe, im zweiten Fall entspricht es dem Gegenrad, dem im Tauchprozeß hergestellten Tellerrad.

Dieser zweite Erzeugungsprozeß wurde hauptsächlich für die Autoindustrie entwickelt, um Bearbeitungszeit zu sparen. Im Vergleich zu einem Tauchprozeß dauert ein Wälzprozeß wesentlich länger, was sich über die vielen Zähne eines Tellerrades aufsummiert. Ein Grund für die längere Wälzzeit ist das geringere Spanvolumen pro Werkzeugumdrehung, ein anderer Grund liegt in der längeren Nebenzeit, die das Werkzeug trotz Eilgang benötigt, um von einer Wälzendposition wieder in die Wälzanfangsposition für die nächste Zahnlücke zu kommen. Denn nach dem Stand der Technik erfolgt bei allen durch Wälzen hergestellten Spiralkegelrädern der Wälzprozeß für jede Zahnlücke eines Rades immer in der gleichen Richtung. Hintergrund hierfür ist der Einfluß unterschiedlicher Abdrängungen, denen die Verzahnmaschine in Abhängigkeit vom Bearbeitungsprozeß und somit bei wechselnder Wälzrichtung unterworfen wäre. Am Werkstück führen sich ändernde Abdrängungen je nach Wälzrichtung zu Teilungsfehlern und zu unterschiedlichen Formabweichungen der Flankentopographie.

Aus der DE 195 17 360 C1 und aus der US 5,310,295 sind zwar zwei ähnliche kontinuierliche Wälzverfahren zum Schleifen von bogenverzahnten Kegelrädern im Einzelteil-Wälzverfahren bekannt, bei denen in Abwärtswälzung bis zu einem ersten Umkehrpunkt eine Flanke und in Aufwärtswälzung bis zu einem zweiten Umkehrpunkt eine andere Flanke derselben Zahnlücke bearbeitet wird. Dabei bedeutet Abwärtswälzen die Wälzrichtung, bei der sich das Werkzeug beim Wälzprozeß auf einer kreisbogenförmigen Bahn von oben nach unten bewegt, und Aufwärtswälzen die entsprechende umgekehrte Wälzrichtung. Jedoch werden mit diesem Wälzverfahren keine Nebenzeiten verkürzt, vielmehr kommt es in diesem Fall darauf an, daß bei dem Wälzprozeß trotz der unterschiedlichen Kegelwinkel an der Schleifscheibe ein richtiger Eingriffswinkel und eine richtige Topographie an den beiden Zahnflanken entstehen.

Außerdem ist es bekannt, beim Wälzfräsen von Spiralkegelrädern das sogenannte Double Roll-Verfahren anzuwenden. Dabei wird der Messerkopf in einer mittleren Wälzposition in das Werkstück eingestochen, um in kurzer Zeit viel Material aus der Zahnlücke zu entfernen, jedoch ohne die endgültige Wälztiefe zu erreichen. Dann folgt ein Aufwärtswälzen mit Spanabtrag an einer Zahnflanke und danach eine weitere Zustellung, um auf die endgültige Wälztiefe und in die Wälzanfangsposition zu gelangen. Von hier aus werden nun beide Zahnflanken durch Abwärtswälzen hergestellt. Dieser Vorgang wiederholt sich bei jeder Zahnlücke, so daß letztendlich doch alle Lücken in der gleichen Wälzrichtung fertiggestellt werden.

Für den Wälzprozeß bei Spiralkegelrädern werden im Gear Handbook, Fig. 20-2 und Fig. 20-3, rein mechanisch arbeitende Maschinen erläutert, wobei eine Wälzfräsmaschine (generator) unter anderem eine Wälztrommel oder -wiege (cradle) und einen besonderen Mechanismus zum Neigen (tilt) des Messerkopfs besitzt. Dagegen können moderne CNC-Maschinen zum Fräsen oder Schleifen von Spiralkegelrädern, wie sie z.B. in der DE 196 46 189 C2 oder in der DE 37 52 009 T2 beschrieben sind, dies ohne Wälztrommel und ohne Neigungsmechanismus nur durch räumliche Bewegungen von Werkzeugträger und Werkstückträger erreichen. Beim Einzelteilverfahren werden dazu lediglich fünf gesteuerte Achsen benötigt, drei translatorische und zwei rotatorische. Der fehlende sechste Freiheitsgrad für die allgemeine Lage eines starren Körpers im Raum, hier des Werkzeugs relativ zum Werkstück, ist die Drehung des Werkzeugs um seine Rotationsachse. Sie wird beim Einzelteilverfahren nicht als gesteuerte Achse benötigt, weil das Werkzeug rotationssymmetrisch ist und sein Antrieb -unabhängig von den anderen fünf Achsen- nur für das Erreichen einer gewünschten Schnittgeschwindigkeit erforderlich ist.

Solche CNC-Maschinen erreichen gegenüber rein mechanisch arbeitenden Kegelradverzahnmaschinen wesentlich größere Arbeitsgeschwindigkeiten bei gleichzeitig genaueren Einstell- und Fahrbewegungen und damit eine höhere Wirtschaftlichkeit. Trotzdem fordert die Autoindustrie, die Bearbeitungszeiten pro Werkstück weiter zu verkürzen, um Kosten senken zu können.

Daher ist es Aufgabe der Erfindung, ein Verfahren und eine Maschine der eingangs genannten Art so auszubilden, daß sich Spiralkegelräder, die im Einzelteilverfahren hergestellt werden, in kürzerer Zeit durch einen Wälzprozeß bearbeiten lassen als bisher, ohne dabei merkliche Einbußen in der Genauigkeit der Zahnflanken hinnehmen zu müssen.

Diese Aufgabe ist erfindungsgemäß gelöst durch ein Verfahren nach Patentanspruch 1 bzw. durch eine Maschine nach Patentanspruch 7.

Der Vorteil der auf diesen beiden Änderungen beruhenden Erfindung besteht in einer effizienteren Bearbeitung von gewälzten Spiralkegelrädern. Bisher wurde jede Zahnlücke eines Werkstücks in nur einer Wälzrichtung fertiggestellt und für die nächste Zahnlücke mußte das Werkstück ohne Spanabtrag, also im Leerlauf, wieder in die Ausgangsposition zurückgeführt werden. Erfindungsgemäß wird nun auf dem Rückweg bereits die zweite Zahnlücke in umgekehrter Wälzrichtung bearbeitet, und ist auf diese Weise die Ausgangsposition wieder erreicht, wird in der ursprünglichen Wälzrichtung bereits die dritte Zahnlücke fertiggestellt.

Dieser Vorteil ist unabhängig von der Art der Bearbeitung, ob es sich dabei um das Wälzfräsen mit einem Messerkopf oder das Wälzschleifen mit einer topfförmigen Schleifscheibe oder um noch ein anderes Wälzverfahren handelt. Beim Wälzfräsen zeigt sich jedoch noch ein zusätzlicher Vorteil der Erfindung, daß nämlich die Messerschneiden durch die wechselnde Wälzrichtung gleichmäßiger beansprucht werden und entsprechend gleichmäßiger verschleißen.

Die Wälzprozesse können sich auch danach unterscheiden, wie das Werkzeug von der jeweiligen Startposition in die Wälzanfangsposition gelangt. Unter Startposition soll hier die Position verstanden werden, in der auch der Teilvorgang durchgeführt wird, ohne daß das Werkzeug mit dem Werkstück kollidiert.

In einer Ausführungsform der Erfindung ist die jeweilige Startposition gleichzeitig eine Wälzanfangsposition, in der das Werkzeug relativ zum Werkstück die vorgesehene Wälztiefe erreicht hat und ein Wälzprozeß begonnen werden kann. In diesem Fall befindet sich z.B. beim Wälzfräsen der Messerkopf knapp neben dem Werkstück und fräst von da aus in einem einzigen Wälzprozeß eine vollständige Zahnlücke in das Werkstück. In der dabei erreichten Wälzendposition, d.h. dort, wo der letzte Span in einem Wälzprozeß abgenommen wird, befindet sich das Werkzeug noch in der erzeugten Zahnlücke und das Werkstück kann nicht um eine Zahnteilung gedreht werden. Um die nächste Startposition zu erreichen, muß die Wälzbewegung fortgesetzt werden, bis das Werkzeug die Zahnlücke ganz verlassen hat. Dies kann jedoch im Eilgang erfolgen, so daß diese Ausführungsform neben der Zeitersparnis noch den Vorteil hat, daß außer dem Wälzen und Teilen keine anderen Maschinenbewegungen erforderlich sind und auch die Wälztiefe für das ganze Werkstück nicht geändert wird.

Bei einer anderen Ausführungsform erfolgt von der jeweiligen Startposition aus erst ein Tauchprozeß oder ein kombinierter Tauch-Wälzprozeß in die zu erzeugende oder (z.B. beim Schleifen) in eine bereits vorgearbeitete Zahnlücke, wodurch das Werkzeug und das Werkstück in jeweils eine Wälzanfangsposition in der vorgesehenen Wälztiefe gelangen. Diese Ausführungsform der Erfindung wird vorteilhaft bei Werkstücken mit einer größeren Zähnezahl eingesetzt, bei denen die Wälzeinlaufund Wälzauslaufwege größer sind als bei Ritzeln mit einer kleinen Zähnezahl, worauf später noch im Einzelnen eingegangen wird.

In einer weiteren Ausgestaltung des erfindungsgemäßen Verfahrens ist vorgesehen, daß vor und/oder während jedes Wälzprozesses ein gegebenenfalls unterschiedlicher Einfluß der zugehörigen Wälzrichtung auf die Genauigkeit des Werkstücks durch korrigierte Maschinenparameter kompensiert wird. Wenn z.B. das Verfahren nach der Erfindung nur zur Vorbearbeitung der Zahnlücken angewendet wird, um das Kegelrad anschließend zu härten und zu schleifen, wird im allgemeinen die Teilgenauigkeit ohne Korrektur nicht ausreichend sein. Dann können zwei unterschiedliche Drehwinkel beim Teilvorgang für die eine bzw. die andere Wälzrichtung die regelmäßigen Abweichungen bei der Zahnteilung ausgleichen. Voraussetzung dafür ist lediglich eine Teilungsmessung an einem Proberad, aus der sich die unterschiedlichen Drehwinkel ermitteln lassen. Dabei muß man nur beachten, daß bei Kegelrädern mit ungerader Zähnezahl die erste bearbeitete Zahnlücke und die letzte Lücke die gleiche Wälzrichtung haben, weshalb man sich diese Stelle am Proberad rechtzeitig markieren muß, um bei der Auswertung keinen Fehler zu machen.

In einer weiteren Ausgestaltung des erfindungsgemäßen Verfahrens wird insbesondere der Einfluß der Wälzrichtung auf die Flankenform des Kegelrades durch Topographiemessungen an repräsentativen Zahnlücken der einen bzw. anderen Wälzrichtung erfaßt. Das heißt, an drei oder vier in etwa gleichmäßig am Kegelradumfang verteilten Zahnlücken, die in der einen Wälzrichtung bearbeitet wurden, und an entsprechend verteilten Lücken der umgekehrten Wälzrichtung werden Flankenformmessungen durchgeführt. Dazu erfolgt die Messung vorzugsweise an Gitterpunkten, die für alle Flanken gleich sind. Unter diesen Voraussetzungen lassen sich die Meßdaten der drei oder vier repräsentativen Zahnlücken einer Wälzrichtung mitteln und außerdem können dann auch die Teilungsabweichungen aus der Topographiemessung bestimmt werden.

Es ist besonders vorteilhaft, die Auswertung der Messungen mit einem Rechenprogramm automatisch durchzuführen und mit einer zusätzlichen Software aus den gemittelten Daten korrigierte Maschinenparameter für beide Wälzrichtungen berechnen zu lassen, die dann direkt an die Verzahnmaschine übertragbar sind.

Die Maschine nach Anspruch 7 zur Durchführung des erfindungsgemäßen Verfahrens kann sowohl eine CNC-Maschine mit Wälztrommel und mit Neigungsmechanismus für das Werkzeug, als auch eine moderne 5-Achsen-Maschine sein, wie sie weiter oben bereits beschrieben wurde. Im ersten Fall lassen sich die drei Einrichtungen aus dem Oberbegriff, mit denen die herkömmlichen Verfahrensschritte durchgeführt werden, noch anhand der sich bewegenden Achsen unterscheiden. Im zweiten Fall, einer 5-Achsen-Maschine, ist dies nicht ohne weiteres möglich. Hier bewegen sich bei den drei Verfahrensschritten eines Bearbeitungszyklus alle fünf Achsen gleichzeitig, jedoch nach unterschiedlichen Steuerungsprogrammen, die sich noch den drei Einrichtungen zuordnen lassen. In beiden Fällen ist die Maschine nach der Erfindung gekennzeichnet durch das geänderte Steuerungsmittel der dritten Einrichtung.

Der entscheidende Vorteil dieser Maschine für das Einzelteilverfahren besteht darin, daß abwechselnd eine Zahnlücke in der einen Wälzrichtung und die nächste Lücke in der umgekehrten Wälzrichtung bearbeitbar ist. Dadurch gibt es kein bloßes Zurückführen von Werkzeug und Werkstück in ihre Startpositionen ohne Spanabtrag. Statt dessen verkürzen sich die Nebenzeiten, und die Gesamtzeit für die Bearbeitung eines Kegelrads wird deutlich geringer. Ein weiterer, bemerkenswerter Vorteil liegt in der besseren Nutzung des Werkzeugs, da durch die wechselnden Wälzrichtungen ein Ausgleich der Belastung von innen- und außenschneidenden Bereichen des Werkzeugs entsteht. Dieser bewirkt einen wesentlich gleichmäßigeren Verschleiß des Werkzeugs, das daraufhin länger im Einsatz bleiben kann.

Eine weitere Ausgestaltung der erfindungsgemäßen Maschine besteht aus einem zusätzlichen Steuerungsmittel, mit dem vor und/oder während jedes Wälzprozesses ein unterschiedlicher Einfluß der zugehörigen Wälzrichtung auf die Genauigkeit des Werkstücks durch korrigierte Maschinenparameter kompensierbar ist. Damit wird der Hauptgrund beseitigt, der wechselnde Wälzrichtungen an einem Werkstück bisher verhindert hat. Bei rein mechanischen Verzahnmaschinen konnten solche Korrekturen der Einstellparameter in Abhängigkeit von der wechselnden Wälzrichtung praktisch nicht realisiert werden, dies ist erst bei CNC-Maschinen mit einer erfindungsgemäß programmierten Steuerung möglich und führt so zu den oben genannten Vorteilen der Erfindung. Ein weiterer Aspekt ist, daß die Auswirkungen wechselnder Wälzrichtungen auf ein Kegelrad nichtlineare Korrekturen über den ganzen Wälzprozeß erfordern, was mit der erfindungsgemäßen Maschine ebenfalls möglich ist.

In weiterer Ausgestaltung der Maschine sind dem zusätzlichen Steuerungsmittel getrennt für beide Wälzrichtungen korrigierte Maschinenparameter übertragbar, nach denen die Zahnlücken je nach Wälzrichtung bearbeitbar sind. Diese Ausgestaltung der Maschine bringt den sehr wichtigen Vorteil, daß das erfindungsgemäße Verfahren auch wirtschaftlich einsetzbar ist. Denn die Korrekturen, die für die gleichbleibende Genauigkeit der so hergestellten Kegelräder erforderlich sind, ändern sich mindestens von Serie zu Serie, manchmal schon von Scharfschliff zu Scharfschliff des Werkzeugs, und müssen sich deshalb mit möglichst geringem Aufwand ermitteln und in der Maschine berücksichtigen lassen. Dafür gibt es bereits Rechenprogramme, welche die korrigierten Einstellparameter automatisch ermitteln. Die Maschine muß aber auch in der Lage sein, die übertragenen Daten je nach Wälzrichtung der gerade zu bearbeitenden Zahnlücke korrekt zu berücksichtigen.

Weitere Einzelheiten der Erfindung werden im folgenden unter Bezugnahme auf die Zeichnungen näher beschrieben. Es zeigt
- Fig. 1: ein Flow-Chart für das herkömmliche Wälzverfahren mit immer der gleichen Wälzrichtung,
- Fig. 2: ein Flow-Chart für das erfindungsgemäße Wälzverfahren mit abwechselnden Wälzrichtungen,
- Fig. 3: schematisch den bisherigen Wälzprozeß zur Herstellung von Spiralkegelrädern,
- Fig. 4: schematisch den bisherigen Tauch-Wälzprozeß zur Herstellung von Spiralkegelrädern,
- Fig. 5: schematisch den erfindungsgemäß veränderten Wälzprozeß zur Herstellung von Spiralkegelrädern,
- Fig. 6: schematisch den erfindungsgemäß veränderten Tauch-Wälzprozeß zur Herstellung von Spiralkegelrädern.
- Fig. 7: eine schematische Darstellung einer erfindungsgemäßen Maschine.

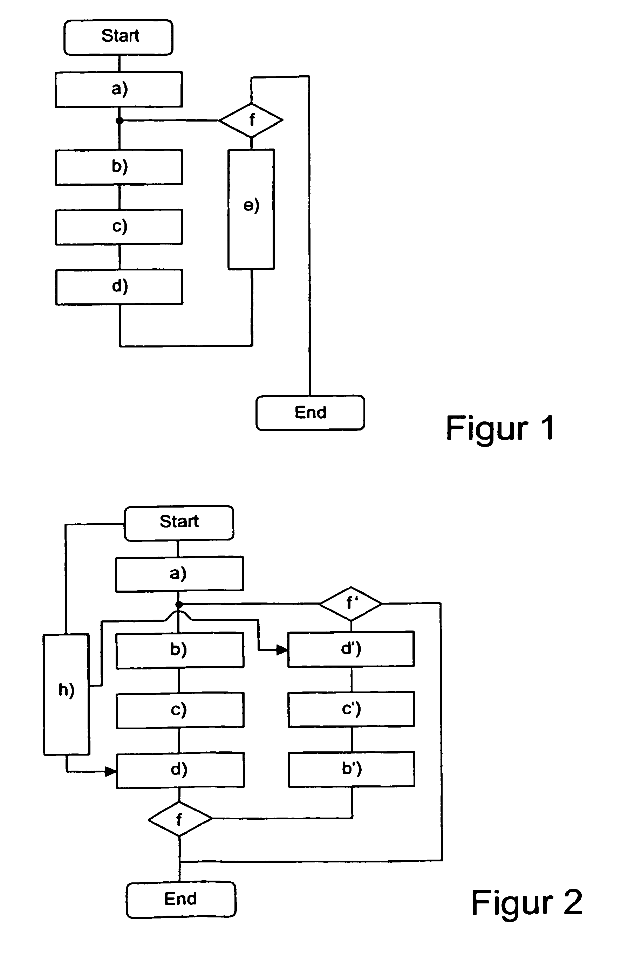

In Fig. 1 sind die wichtigsten Verfahrensschritte für das Wälzen gemäß dem Stand der Technik in einem Flow-Chart wiedergegeben. Es sind dies im Feld a das Antreiben des Werkzeugs um seine Rotationsachse, im Feld b das Führen des Werkzeugs und des Werkstücks in jeweils eine Startposition, im Feld c das Drehen des Werkstücks um eine Zahnteilung, im Feld d das Bearbeiten einer vollständigen Zahnlücke durch einen Wälzprozeß in einer vorgesehenen Wälztiefe, wobei das Werkzeug und das Werkstück jeweils eine Wälzendposition erreichen, und im Feld e das Zurückführen des Werkzeugs und des Werkstücks in ihre Startpositionen. Die Raute f symbolisiert eine Verzweigung, von der so lange an den Anfang von Feld b zurückgesprungen wird, bis alle Zahnlücken des Werkstücks fertiggestellt sind. Die verwendeten Buchstaben für die einzelnen Schritte stimmen der leichteren Zuordnung wegen mit denen des Hauptanspruchs überein.

Im Vergleich dazu zeigt Fig. 2, daß im Flow-Chart für das erfindungsgemäße Wälzverfahren das Feld e der Fig. 1 durch die Felder b', c' und d' ersetzt sind. Dabei handelt es sich um die drei Verfahrensschritte: b' - Führen des Werkzeugs und des Werkstücks in jeweils eine zweite Startposition in der Nähe der zuvor erreichten Wälzendposition, c' - Drehen des Werkstücks um eine Zahnteilung, d' - Bearbeiten einer vollständigen Zahnlücke durch einen Wälzprozeß mit umgekehrter Wälzrichtung gegenüber der des Verfahrensschritts d, wobei das Werkzeug und das Werkstück jeweils eine zweite Wälzendposition in der Nähe der ersten Startposition erreichen. Allein durch die Anordnung der Felder in den beiden Flow-Charts kommt schon der Vorteil zum Ausdruck, den an dieser Stelle der Wälzprozeß in umgekehrter Richtung gegenüber dem herkömmlichen Zurückführen von Werkzeug und Werkstück in die Startposition hat, daß nämlich eine vollständige Zahnlücke bearbeitet wird statt eines Rücklaufs ohne Spanabnahme. Durch die Rauten f und f' wird jeweils eine Verzweigung symbolisiert, von denen so lange an den Anfang von Feld b' bzw. b zurückgesprungen wird, bis alle Zahnlücken des Werkstücks fertiggestellt sind. Außerdem ist in Fig. 2 schematisch dargestellt, wie sich zusätzlich in einem parallel verlaufenden Verfahrensschritt h vorzugsweise korrigierte Maschinenparameter je Wälzrichtung bereitstellen und den zugehörigen Verfahrensschritten d und d' zuführen lassen.

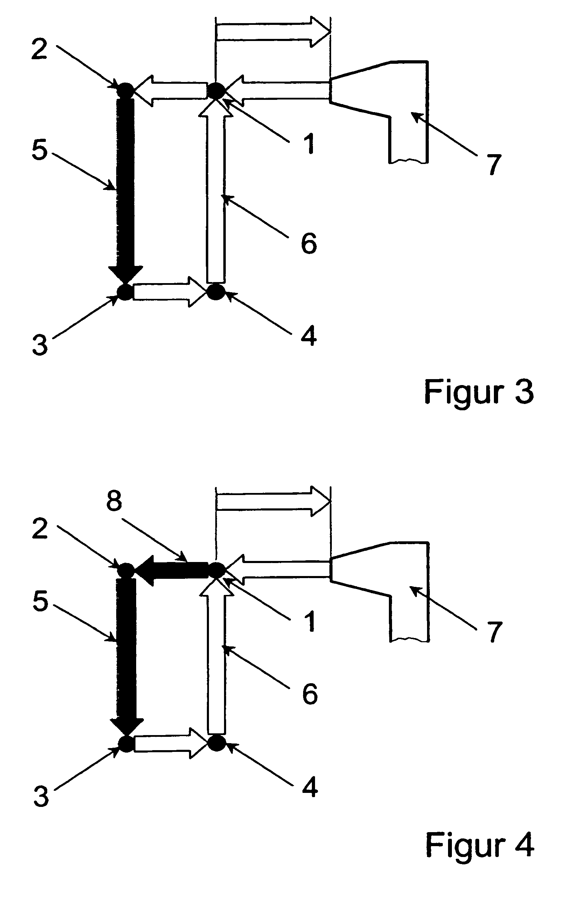

In den folgenden Figuren 3 bis 6 werden die Bewegungen des Messerkopfs 7 schematisch dargestellt. Die Pfeile stehen für Relativbewegungen des Messerkopfs zum Werkstück. Die horizontalen Pfeile kennzeichnen Tauchbewegungen bzw. Bewegungen in Richtung dieser Achse, während die vertikalen Pfeile für Wälzbewegungen stehen. Weiß steht hierbei für Bewegungen im Eilgang ohne Spanabnahme und schwarz für Vorschubbewegungen mit Spanabnahme.

In Fig. 3 wird nach dem Stand der Technik der Messerkopf 7 aus einer Ruheposition zu Beginn der Herstellung in eine Startposition 1 geführt, in der auch ein Teilvorgang (ein Drehen des Werkstücks um eine Zahnteilung), möglich ist. Dann erfolgt eine Bewegung in die Wälzanfangsposition 2, von wo aus das Wälzen 5, in diesem Fall das Abwärtswälzen, zur Erzeugung einer Zahnlücke erfolgt. Mit Erreichen der Endposition 3 ist der Wälzprozeß beendet, und der Messerkopf 7 wird in die Position 4 zurückgezogen. Anschließend erfolgt eine Rückwälzbewegung 6 bis zur Startposition 1, das Drehen des Werkstücks um eine Zahnteilung und der erneute Ablauf der beschriebenen Erzeugung einer Zahnlücke. Nach Herstellung aller Zahnlücken des Werkstücks wird der Messerkopf 7 wieder in die Ruheposition gefahren.

Beim in Fig. 4 dargestellten Tauch-Wälzprozeß nach dem Stand der Technik ist die erforderliche Strecke für das Wälzen 5 kürzer, was durch die geringere Pfeillänge veranschaulicht wird. In diesem Prozeß erfolgt wieder eine Bewegung des Messerkopfs 7 aus der Ruhestellung zur Startposition 1, daran schließt sich der Tauchprozeß 8 in das Werkstück an. Nach Erreichen der vollen Tauchtiefe und damit der Wälzanfangsposition 2 wird das Tauchen beendet und das Wälzen 5 gestartet. Mit Erreichen der Endposition 3 ist wiederum der Wälzprozeß beendet und der Messerkopf wird in die Startposition 4 zurückgezogen. Anschließend erfolgt die Rückwälzbewegung 6 bis zur Startposition 1, das Drehen des Werkstücks um eine Zahnteilung und die Erzeugung anschließender Zahnlücken nach dem beschriebenen Ablauf. Nach Herstellung aller Zahnlücken des Werkstücks wird der Messerkopf 7 wieder in die Ruheposition gefahren.

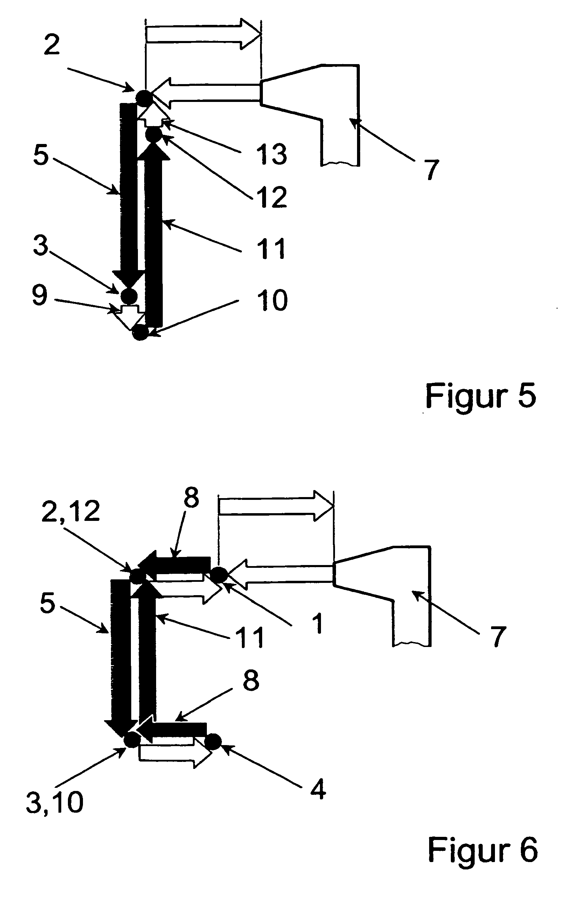

Fig. 5 zeigt einen erfindungsgemäßen, gegenüber Fig. 3 verbesserten Wälzprozeß. Ausgehend von der Ruheposition wird der Messerkopf 7 sofort in die Startposition 2 geführt, von wo aus das Wälzen 5 beginnt. Nach Erreichen der Wälzendposition 3, in welcher der letzte Span abgenommen wird, folgt eine erste Eilwälzbewegung 9 zum vollständigen Verlassen der Zahnlücke, womit die zweite Startposition 10 erreicht wird. Das Werkstück wird hier um eine Zahnteilung gedreht und dann, durch Wälzen in umgekehrter Richtung 11 bis zur zweiten Wälzendposition 12, eine weitere Zahnlücke erzeugt. An dieser Stelle schließt sich eine zweite Eilwälzbewegung 13 an, um das Werkzeug wieder vollständig aus der Zahnlücke zu führen. Mit dieser zweiten Eilwälzbewegung 13 wird die Wälzanfangsposition 2 wieder erreicht, an der die nächste Drehung des Werkstücks um eine Zahnteilung und die weitere Erzeugung der Zahnlücken nach dem beschriebenen Ablauf erfolgt. Nach Herstellung aller Zahnlücken des Werkstücks wird der Messerkopf 7 wieder in die Ruheposition gefahren.

Beim in Fig. 6 dargestellten erfindungsgemäßen Tauch-Wälzprozeß ist die erforderliche Strecke für das Wälzen 5 und das Wälzen 11 in umgekehrter Richtung wiederum geringer als bei dem in Fig. 5 beschriebenen Prozeß. Ausgehend von der Ruheposition wird der Messerkopf 7 in die Startposition 1 geführt, von wo aus das Tauchen 8 in Vorschubgeschwindigkeit in das Werkstück erfolgt. Nach Erreichen der Wälzanfangsposition 2 startet das Wälzen 5 zur Erzeugung der Zahnlücke. Mit dem Erreichen der Wälzendposition 3, die gleichzeitig der zweiten Wälzanfangsposition 10 entspricht, ist der Wälzprozeß beendet, und der Messerkopf 7 wird bis in die Position 4 geführt. Bereits hier schließt sich die Drehung des Werkstücks um eine Zahnteilung an. Danach wird eine Tauchbewegung 8 in das Werkstück bis zum Wiedererreichen der zweiten Wälzanfangsposition 10 ausgeführt, von welcher durch Wälzen in umgekehrter Richtung 11 die nächste Zahnlücke erzeugt wird. Mit Erreichen der zweiten Wälzendposition 12, die in diesem Fall mit der Wälzanfangsposition 2 übereinstimmt, wird der Messerkopf 7 aus der Zahnlücke zur Startposition 1 geführt. Dann erfolgt wiederum die Drehung des Werkstücks um eine Zahnteilung und die Herstellung der folgenden Zahnlücken im beschriebenen Prozeß. Nach Herstellung aller Zahnlücken des Werkstücks wird der Messerkopf 7 wieder in die Ruheposition gefahren.

Die in den Figuren 3 bis 6 dargestellten Prozesse können auch mit umgekehrten Wälzrichtungen durchgeführt werden, das heißt das Wälzen 5 ist kein Abwärtswälzen sondern ein Aufwärtswälzen und die Rückwälzbewegung 6 bzw. Wälzen in umgekehrter Richtung 11 ist dann ein Abwärtswälzen. In diesem Fall würden sich ebenso die Start-, Wälzanfangs- und Wälzendpositionen verändern.

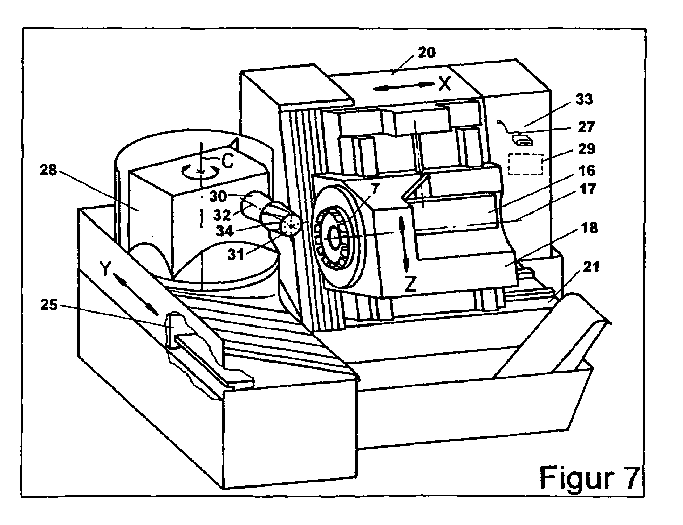

Eine erfindungsgemäße Maschine ist beispielhaft in Fig. 7 dargestellt. Äußerlich entspricht sie der in der bereits genannten DE 196 46 189 C2 beschriebenen CNC-Maschine zum Herstellen von bogenverzahnten Kegelrädern. Sie besitzt einen Antriebsmotor 16 zum Drehen des Messerkopfs 7 um seine Rotationsachse 17. Motor 16 und Messerkopf 7 befinden sich auf einem ersten Schlitten 18, der seitlich an einem Maschinengehäuse 20 geführt wird und in der Höhe (parallel zur Z-Achse) verfahrbar ist. Das Maschinengehäuse 20 ist seinerseits horizontal auf einem Maschinenbett 21 verfahrbar (parallel zur X-Achse), auf dem sich außerdem ein zweiter Schlitten 25 befindet. Dieser zweite Schlitten 25 trägt einen um eine vertikale Achse C drehbaren Werkstückträger 28 mit einer Werkstückspindel 30 und einem Werkstück 31, die im Werkstückträger 28 um eine horizontale Achse 32 drehbar gelagert sind. Der zweite Schlitten 25 ist ebenfalls horizontal verfahrbar (parallel zur Y-Achse), jedoch rechtwinklig zur X-Achse des Maschinengehäuses 20 und zur Z-Achse des ersten Schlittens 18. Damit bilden diese Maschinenkomponenten die mechanischen Voraussetzungen, Spiralkegelräder durch einen Wälzprozeß im Einzelteilverfahren herzustellen. Der entscheidende Unterschied dieser erfindungsgemäßen Maschine zu einer herkömmlichen Maschine besteht in einem geänderten Steuerungsmittel 29 der CNC-Steuerung, die in dem Schaltschrank 33 untergebracht ist.

Gemäß Stand der Technik sorgt ein konventionelles Steuerungsmittel dafür, daß zum Beispiel nach einem Wälzprozeß, bei dem die fünf Achsen X, Y, Z, C, und die Werkstückachse 32 eine zuvor berechnete gekoppelte Bewegung ausführen müssen, der Messerkopf 7 und das Werkstück 31 von ihren Wälzendpositionen wieder zu ihrer jeweiligen Startposition zurückgeführt werden. Um die Kopplung der beteiligten fünf Achsen nicht zu verlieren, erfolgt dieses Zurückführen üblicherweise in der bereits zu Fig. 3 beschriebenen Rückwälzbewegung 6, und zwar nach einem Zurückziehen des Messerkopfs 7 aus einer gerade erzeugten Zahnlücke 34.

Mit dem erfindungsgemäß geänderten Steuerungsmittel 29 der CNC-Steuerung lassen sich Messerkopf 7 und Werkstück 31 anstelle der Rückwälzbewegung in jeweils eine zweite Startposition in der Nähe der gerade erreichten Wälzendpositionen führen, von wo aus sie nach einem Teilvorgang eine vollständige Zahnlücke 34 in einem Wälzprozeß mit umgekehrter Wälzrichtung bearbeiten. Auf diese Weise erreichen sie auch wieder ihre ursprünglichen Startpositionen, aber nicht im Leerlauf, sondern durch einen vollständigen Arbeitsgang. Um dabei die gleiche Genauigkeit an den Werkstücken 31 erreichen zu können wie mit einer herkömmlichen CNC-Maschine, wird vorzugsweise ein zusätzliches Steuerungsmittel in der konventionellen CNC-Steuerung vorgesehen, mit dem vor und/oder während jedes Wälzprozesses ein unterschiedlicher Einfluß der jeweiligen Wälzrichtung auf die Genauigkeit des Kegelrades (Werkstück) kompensierbar ist. Dieses zusätzliche Steuerungsmittel kann zusammen mit der konventionellen CNC-Steuerung ein geändertes Steuerungsmittel 29 bilden. Es ist an der Maschine nach Fig. 7 eine Datenleitung 27 vorgesehen, auf der getrennt für beide Wälzrichtungen korrigierte Maschinenparameter an die geänderten Steuerungsmittel 29 übertragbar sind. Die korrigierten Maschinenparameter können zum Beispiel von einem externen Computer geliefert werden. Die geänderten Steuerungsmittel 29 unterscheiden sich unter anderem dadurch von konventionellen Steuerungsmitteln, dass sie in der Lage sind das erfindungsgemässe Verfahren so auszuführen, dass der Wälzprozeß in einer ersten Richtung erfolgt und dann ein Wälzprozeß in umgekehrter Richtung ausgeführt wird. Beim Wälzprozess in der einen Richtung und beim Wälzprozess in der umgekehrten Richtung kommen dabei unterschiedliche Korrekturen der Einstellparameter zum Einsatz.

## Patentansprüche

1. Verfahren zur spanenden Bearbeitung, insb. Wälzfräsen oder Wälzschleifen, von Spiraikegeirädem mit einem rotationssymmetrischen Werkzeug, das im wesendichen die folgenden Schritte umfasst:
a) Antreiben des Werkzeugs um seine Rotationsachse,
b) Führen des Werkzeugs und eines Werkstücks in jeweils eine ersts Startposition,
c) Drehen des Werkstücks um eine Zahntellung ausser vor der Bearbeitung der ersten Zahnlücke des Werkstücks,
d) Bearbeiten einer vollständigen Zahnlücke durch einen Wälzprozess in einer vorgesehenen Wälztlefe, wobei das Werkzeug und das Werkstück jeweils eine erste Wälzendposition erreichen,
b') Führen das Werkzeugs und des Werkstücks in jeweils eine zweite Startposition in der Nähe der zuvor erreichten ersten Wälzendpositionen,
c') Drehen des Werkstücks um eine Zahnteilung.
d') Bearbeiten einer vollständigen Zahnlücke durch einen Wälzprozess mit umgekehrter Wälzrichtung gegenüber der das Verfahrensschritts d), wobei das Werkzeug und das Werkstück jeweils eine zweite Wälzendposition in der Nahe der ersten Startpositonen erreichen,
c') Wiederholen der Schritte b), c) und d) im Wechsel mit den Schritten b'), c') und d') bit alle Zahnlücken des Werkstücks bearbeitet sind.

2. Verfahren nach Anspruch 1 wobei die jeweilligen Startpositionen glelchzeltig Wälzanfangspositionen sind, in der das Werkzeug relativ zum Werkstück die vorgesehene Wälztiefe erreicht hat.

3. Verfahren nach Anspruch 1 wobei von den jeweiligen Startpositionen aus erst ein Tauchprozeß oder ein kombinierter Tauch/ Wälzprozeß in eine zu erzeugende oder in eine bereits vorgearbeitete Zahnlücke erfolgt und wobei
**dadurch** das Werkzeug und das Werkstück in jeweils eine Wälzanfangsposition

4. Verfahren nach Anspruch 1, wobei vor und/oder während jedes Wälzprozesses ein gegebenenfalls unterschiedlicher Einfluß der zugehörigen Wälzrichtung auf die Genaufgkeit das Werkstücks durch korrigierte Maschinenparameter kompensiert wird.

5. Verfahren nach Anspruch 4, wobei ein unterschiedilcher Einfluß der Wälzrichtung auf das Werkstück durch Topographiemessungen von repräsentativen Zahnlücken der einen bzw. der anderen Wälzrichtung erfaßt werden.

6. Verfahren nach Anspruch 5, wobei getrennt für beide Wälzrichtungen aus gemittelten Daten der Topographiemessungen korrigierte Maschinenparameter berechnet werden.

7. Maschine zur spanenden Bearbeitung von Spiralkegelrädem (31) in einem Einzel-teilverfahren umfassend:
a) einen Antriebsmotor zum Drehen eines Werkzeugs (7) um seine Rotationsachse (17),
b) eine erste Einrichtung zum Führen des Werkzeugs (7) und eines Werkstücks (31) in jeweils eine erste Startposition,
c) eine zweite Einrichtung zum Drehen des Werkstücks (31) um eine Zahntellung,
d) eine dritte Einrichtung zum Bearbeiten einer vollständigen Zahnlücke durch einen Wälzprozeß, wobei das rotierende Werkzeug (7) und das Werkstück (31) jeweils eine erste Wälzendposition erreichen, sowie zum Zurückführen das Werkzeugs (7) und das Werkstücks (31) in ihre Startpositionen,
e) eine CNC-Steuerung (29).
wobei ein Steuerungsmittel für die dritts Einrichtung so ausgeführt ist, dass das Werkzeug (7) und das Werkstück (31) in jeweils eine zweite Startposition in der Nähe der zuvor erreichten ersten Wälzendpositionen führbar sind, und nach einem Teilvorgang eine vollständige Zahnlücke in einem Wälzprozeß mit umgekehrter Wälzrichtung bearbeitbar ist, wobei das Werkzeug (7) und das Werkstück (31) jeweils eine zweite Walzendposition in der Nähe der ersten Startpositionen erreichen.

8. Maschine nach Anspruch 7 mit einem weiteren Steuerungsmittel, mit dam vor und/oder während des Wälzprozesses ein gegebenenfalls unterschiedlicher Einfluß der zugehörigen Wälzrichtung auf die Genaulgkeit des Werkstücks (31) durch korrigierte Maschinenparameter kompensierbar ist.

9. Maschine nach Anspruch 8, worin an das weitere Steuerungsmittel getrennt für beide Wälzrichtungen korrigierte Maschinenparameter Übertragbar sind, nach denen die Zahnlücken je nach Wälzrichtung bearbeitbar sind.

## Claims

1. Method for chip-producing processing, in particular for hobbing or generating grinding, of spiral bevel gears using a rotationally symmetrical tool, the method comprising essentially the following steps:
a) driving the tool around its rotational axis,
b) guiding the tool and a workpiece respectively to a first start position,
c) rotating the workpiece by one tooth pitch except prior to the processing of the first tooth gap of the workpiece,
d) processing a complete tooth gap using a rolling process at a scheduled rolling depth, wherein the tool and the workpiece respectively reach a first rolling end position,
b') guiding the tool and the workpiece respectively to a second start position in the vicinity of the previously reached first rolling end position,
c') rotating the workpiece by one tooth pitch,
d') processing a complete tooth gap using a rolling process having a reverse rolling direction with respect to that of the method step d), wherein the tool and the workpiece respectively reach a second rolling end position in the vicinity of the first start positions,
e') repeating the steps b), c) and d) alternately with the steps b'), c') and d') until all tooth gaps of the workpiece are processed.

2. Method according to claim 1, wherein the respective start positions are coevally rolling start positions, in which the tool has reached the scheduled rolling depth relative to the workpiece.

3. Method according to claim 1, wherein at first starting from the respective start positions, a plunging process or a combined plunging/rolling process is carried out into a tooth gap to be generated or already pre-machined, and wherein thus the tool and the workpiece attain to a respective rolling start position.

4. Method according to claim 1, wherein prior to and/or during each rolling process, a possible different influence of the corresponding rolling direction on the preciseness of the workpiece is compensated by corrected machine parameters.

5. Method according to claim 4, wherein a different influence of the rolling direction on the workpiece is measured by topography measurements of representative tooth gaps of the one resp. the other rolling direction.

6. Method according to claim 5, wherein corrected machine parameters are calculated from averaged data of the topography measurements separately for both rolling directions.

7. Machine for chip-producing processing spiral bevel gears (31) in a single indexing process, comprising:
a) a driving motor for driving a tool (7) around its rotational axis (17),
b) a first device for guiding the tool (7) and a workpiece (31) to a respective first start position,
c) a second device for rotating the workpiece (31) by one tooth pith,
d) a third device for processing a complete tooth gap using a rolling process, wherein the rotating tool (7) and the workpiece (31) respectively reach a first rolling end position, as well as for guiding back the tool (7) and the workpiece (31) to their start positions,
e) a CNC control (29),
wherein a control means for the third device is designed such that the tool (7) and the workpiece (31) can be guided to a respective second start position in the vicinity of the previously reached first rolling end position, and a complete tooth gap can be machined in a rolling process having a reverse rolling direction subsequent to an indexing process, wherein the tool (7) and the workpiece (31) reach a respective second rolling end position in the vicinity of the first start positions.

8. Machine according to claim 7 comprising a further control means, by which prior to and/or during the rolling process a possibly different influence of the corresponding rolling direction on the preciseness of the workpiece (31) can be compensated by corrected machine parameters.

9. Machine according to claim 8, wherein corrected machine parameters, according to which machine parameters the tooth gap can be processed depending on the rolling direction, can be transferred separately for both rolling directions.

## Revendications

1. Procédé pour un usinage à enlèvement de copeaux, particulièrement pour tailler en développante ou affûter en développante, des roues coniques spirales en utilisant un outil symétrique par rapport à une rotation, lequel procédé comprenant essentiellement les étapes suivantes :
a) entraîner l'outil autour de son axe de rotation,
b) guider l'outil et une pièce à usiner respectivement à une première position de démarrage,
c) tourner la pièce à usiner par un pas de dents sauf avant l'usinage du premier entre-dents de la pièce à usiner,
d) usiner un entre-dents complet en utilisant un procès à rouler à une profondeur à rouler prévue, cependant l'outil et la pièce à usiner arrivent respectivement à une première position de fin à rouler,
b') guider l'outil et la pièce à usiner respectivement à une deuxième position de démarrage à proximité de la première position de fin à rouler atteinte au préalable,
c') tourner la pièce à usiner par un entre-dents,
d') usiner un entre-dents complet en utilisant un procès à rouler ayant une direction de tournoiement inverse de cette de l'étape d), cependant l'outil et la pièce à usiner arrivent respectivement à une deuxième position de fin à rouler à proximité des premières positions de démarrage,
e') répéter les étapes b), c) et d) à tour de rôle avec les étapes b'), c') et d') jusqu'à tous les entre-dents de la pièce à usiner sont usinés.

2. Procédé selon la revendication 1, cependant les positions de démarrage sont respectivement concurremment des positions de démarrage à rouler, dans lesquelles l'outil a atteint la profondeur à rouler prévue relativement à la pièce à usiner.

3. Procédé selon la revendication 1, cependant un procès de plongée ou un procès de plongée/rouler combiné s'effectue dans un entre-dents à générer ou déjà préusiné respectivement à partir des positions de démarrage, et cependant à cause de ça l'outil et la pièce à usiner arrivent respectivement à une position de démarrage à rouler.

4. Procédé selon la revendication 1, cependant avant et/ou pendant chaque procès à rouler, une influence différente le cas échéant de la direction à rouler correspondante sur l'exactitude de la pièce à usiner est compensée par des paramètres de machine corrigés.

5. Procédé selon la revendication 4, cependant une influence différente de la direction à rouler sur la pièce à usiner est mesurée par des mesurages de topographie des entre-dents représentatives de l'une ou de l'autre direction à rouler.

6. Procédé selon la revendication 5, cependant des paramètres de machine corrigés sont calculés [en utilisant] des données moyennées des mesurages de topographie séparément pour les deux directions à rouler.

7. Machine pour un usinage à enlèvement de copeaux des roues coniques spirales (31) dans un procédé d'indexation séparée, la machine comprenant :
a) un moteur d'entraînement pour entraîner un outil (7) autour de son axe de rotation (17),
b) un premier dispositif pour guider l'outil (7) et une pièce à usiner (31) respectivement dans une première position de démarrage,
c) un deuxième dispositif pour tourner la pièce à usiner (31) par un pas de dents,
d) un troisième dispositif pour usiner un entre-dents complet en utilisant un procès à rouler, cependant l'outil (7) et la pièce à usiner (31) arrivent respectivement à une première position de fin à rouler, ainsi que pour reconduire l'outil (7) et la pièce à usiner (31) à leurs positions de démarrage,
e) une commande numérique à interpolation de points (29), cependant un moyen de commande pour le troisième dispositif est développé afin que l'outil (7) et la pièce à usiner (31) peuvent être guidés respectivement à une deuxième position de démarrage à proximité de la première position de fin à rouler atteinte au préalable et que, après un procès d'indexation, un entre-dents complet peut être usiné dans un procès de rouler ayant une direction de tournoiement inverse, cependant l'outil (7) et la pièce à usiner (31) arrivent respectivement à une deuxième position de fin à rouler à proximité des premières positions de démarrage.

8. Machine selon la revendication 7, comprenant un moyen de commande ultérieur, par lequel une influence différente le cas échéant de la direction à rouler sur l'exactitude de la pièce à usiner (31) peut être compensée par des paramètres de machine corrigés.

9. Machine selon la revendication 8, dans laquelle des paramètres de machine corrigés peuvent être transmis au moyen de commande ultérieur séparément pour les deux directions à rouler.
